# EUROPÄISCHE PATENTSCHRIFT

(11) **EP 0 999 188 B1**
(45) Veröffentlichungstag und Bekanntmachung des Hinweises auf die Patenterteilung: **21.04.2004**
(21) Anmeldenummer: 99120367.0
(22) Anmeldetag: 13.10.1999
(51) Int. Cl.: C03B 33/07, C03B 33/10

(54) **Verfahren und Vorrichtung zum Schneiden eines Laminats aus einem sprödbrüchigem Werkstoff und einem Kunststoff**
Method and apparatus for cutting a laminate from brittle material and a plastic material
Procédé et appareil pour couper un laminé en matière fragile et une matière plastique

(30) Priorität: 06.11.1998 DE 19851353
(43) Veröffentlichungstag der Anmeldung: 10.05.2000
(73) Patentinhaber: Schott Glas, 55122 Mainz (DE)
(72) Erfinder: Habeck, Andreas, Dr., 55257 Budenheim (DE); Bürkle, Roland, Dr., 55268 Nieder-Olm (DE); Otto, Torsten, Dr., 55262 Heidesheim (DE); Scherer, Oliver, 55619 Hennweiler (DE)

(56) Entgegenhaltungen:
- DE-A- 2 921 135
- DE-B- 2 145 552
- DE-U- 9 003 434

## Beschreibung

Die Erfindung bezieht sich auf ein Verfahren und eine Vorrichtung zum Schneiden eines Laminats aus einem sprödbrüchigen Werkstoff und einem Kunststoff mit einem Schneidwerkzeug. Eine bevorzugte Anwendung ist das Schneiden von dünnen Glas- oder Glaskeramik-Kunststoff-Laminaten.

Bei Laminaten aus einem sprödbrüchigen Werkstoff und einem Kunststoff handelt es sich um Verbundwerkstücke, deren Bestandteile aus Materialien bestehen, die sich aufgrund ihrer mechanischen und thermischen Eigenschaften stark unterscheiden.

Kunststoffe, die üblicherweise zur Herstellung genannter Laminate verwendet werden, sind in der Regel mechanisch relativ flexibel bzw. duktil und weisen eine hohe thermische Ausdehnung von typischerweise 20 bis 80 ppm/K und eine niedrige Erweichungstemperatur von typischerweise 120 bis 260°C auf.

Im Gegensatz dazu sind sprödbrüchige Werkstoffe, wie Glas, Glaskeramik oder Keramik, die zur Herstellung o.g. Laminate Verwendung finden, mechanisch spröde und weisen in der Regel eine niedrige thermische Ausdehnung und eine hohe Erweichungstemperatur auf. Die thermische Ausdehnung von Glas liegt typischerweise bei 3,5 bis 11 ppm/K und die Erweichungstemperatur T_{G} beträgt typischerweise 500 bis 750°C.

Aufgrund der genannten, stark unterschiedlichen physikalischen Eigenschaften beider Werkstoffe existiert bisher kein Verfahren und keine Vorrichtung zum Schneiden eines Laminats aus einem sprödbrüchigen Werkstück und einem Kunststoff mit einem Schneidwerkzeug in einem Arbeitsschritt. Die bisher bekannten Verfahren und Vorrichtungen beziehen sich lediglich auf das Schneiden des jeweils reinen Werkstoffs, nicht aber des Verbunds.

Um einen reinen sprödbrüchigen Werkstoff, wie beispielsweise Glas, mechanisch zu schneiden, wird die Glasoberfläche, z.B. mittels eines Diamantschneiders oder eines Schneidrädchens bzw. einer Schneidklinge aus Hartmetall, angeritzt. Die so entstandene Oberflächenbeschädigung stellt nun eine Sollbruchstelle des Glases dar, entlang der der Riß unter Zugbelastung kontrolliert entlangläuft. Beim Anritzen des Glases darf die auf das Schneidinstrument ausgeübte Normalkraft einen gewissen Wert, abhängig von der Dicke des Glases, nicht überschreiten. Ansonsten führt dies im allgemeinen zu einem unkontrollierten Bruch des Glases (H. Jebsen-Marwedel und R. Brückner (Editoren), Glastechnische Fabrikationsfehler, Springer-Verlag, Berlin, Heidelberg, New York, 1980, S. 577f, Kapitel 12.7, F. Kerkhof und B. Gänswein, Das "Schneiden" des Glases).

Neben dem konventionellen mechanischen Schneiden sind seit einiger Zeit Verfahren bekannt, bei denen die Induzierung von Spannungen entlang der Schneidlinie auf thermischem Wege generiert wird. So ist beispielsweise aus der DE 197 15 537 A1 ein Verfahren und eine Vorrichtung zum Durchtrennen von flachen Werkstücken aus sprödem Material bekannt, wobei mittels eines Laserstrahls eine Induzierung einer thermomechanischen Spannung entlang einer Trennlinie erfolgt.

Des weiteren ist ein Schneiden des reinen sprödbrüchigen Werkstoffs mittels Sandstrahlen über einer Maske (JP 06008145 A) oder mittels Wasserstrahlschneiden unter Verwendung eines Abrasionmittels (DE 35 33 340 A1) bekannt.

Im Gegensatz dazu werden reine Kunststoffolien in der Regel entweder mit einem Scherenschnitt unter Ausnutzung einer Scherwirkung zweier gegeneinander bewegter scharfkantiger Hartmetallklingen oder durch Verwendung eines sehr scharfen Schneidmessers oder Schneidrads geschnitten.

Sämtliche o. g. Verfahren eignen sich jedoch nicht, ein genanntes Laminat, z.B. ein Glas-Kunststoff-Laminat, zu schneiden. Es ist unmittelbar einsichtig, daß das Scherenschneiden des Laminats nur bei Verwendung von Dünngläsem möglich ist. Allerdings hat auch hier der Scherenschnitt durch die Scherwirkung in der dünnen Glasfolie unkontrollierte Sprödrisse quer zur Schnittrichtung zur Folge. Ein scharfes, skalpellartiges Schnittmesser ist zwar in der Lage, die Kunststoffolie zu durchtrennen, jedoch nicht das Glas zu durchschneiden oder anzuritzen. Vielmehr würde es an der Glasoberfläche sehr schnell abstumpfen.

Beim Schneiden mit einem Diamanten oder einem Hartmetallrädchen ist es gemäß dem o. G. notwendig, den Belastungsdruck unterhalb eines gewissen Grenzwerts zu halten, um einen unkontrollierten Bruch des Glases zu vermeiden. Der so begrenzte maximale Belastungsdruck des Schneidwerkzeugs reicht jedoch nicht aus, die Folie des Laminatverbundes zuverlässig zu durchtrennen. Zur Durchtrennung der Kunststoffolie wären aufgrund ihrer Flexibilität relativ hohe Belastungsdrücke (bzw. Normalkräfte) erforderlich, die jedoch ihrerseits wieder zu einem unkontrollierten Bruch des Glases führen würden.

Infolge dieser Tatsachen ist es mit den herkömmlichen mechanischen Schneidverfahren nicht möglich, die genannten Laminate in einem Arbeitsgang zu schneiden. Alternative Verfahren zum Schneiden der genannten Verbundstücke besitzen eine Reihe von Nachteilen.

Beim genannten Laserschneiden ist der Apparateaufwand aufgrund des Lasers und der notwendigen optischen Peripherie wesentlich größer, wodurch wesentlich höhere Kosten entstehen. Verdampftes oder sogar pyrolysiertes Material kann sich auf dem Laminat oder den optischen Komponenten niederschlagen

Wasserstrahlschneiden führt durch das Wasser und das beigemischte Abrasionmittel zu einer Verschmutzung der Oberfläche und zu Oberflächendefekten. Ebenfalls zu einer Verschmutzung der Oberfläche und zu Oberflächendefekten des Laminats führt ein Schneiden mittels Sandstrahlen. Diese Verfahren sind meist mit einem zusätzlichen Reinigungsaufwand verbunden.

Die Einführung von genannten Laminaten, wie z.B von dünnen Glas-Kunststoff-Laminaten in bestehende Produktanwendungen, z.B. in der Displayindustrie als Ersatz für dünne Glassubstrate wird erheblich erleichtert, wenn ein möglichst zu den konventionellen Schneidetechniken kompatibles Schneideverfahren zur Verfügung steht, das geringe Zusatzkosten verursacht und gegebenenfalls in bestehenden Glasschneideanlagen implementiert werden kann.

Ein Verfahren zum Ausschneiden von Spiegeln, insbesondere von Kraftfahrzeug-Rückspiegeln, aus einer verspiegelten, rückseitig mit einer Splitterschutzschicht versehenen Glasscheibe, wobei die Glasscheibe auf ihrer Oberfläche längs der gewünschten Schnittlinie bzw. längs der gewünschten Schnittlinien mit einer Einritzung versehen und längs der Einritzung durch Spannungen getrennt wird, und wobei auf der Rückseite der Glasscheibe in der Splitterschutzschicht eine der Einritzung auf der Oberfläche der Glasscheibe kongruente Brennspur erzeugt und danach erst die Glasscheibe längs der Einritzung getrennt wird, geht aus der DE-A-2145552 hervor.

Aufgabe der vorliegenden Erfindung ist es, ein Verfahren und eine Vorrichtung zum Schneiden eines Laminats aus einem sprödbrüchigen Werkstoff, insbesondere aus Glas, Glaskeramik oder Keramik und einem Kunststoff mit einem Schneidwerkzeug bereitzustellen, dabei soll das Laminat möglichst in einem Arbeitsgang geschnitten, und gleichzeitig soll eine hohe Schnittgenauigkeit und Konturtreue sowie ein schnelles Schneiden ermöglicht werden.

Weiterhin ist es Aufgabe der Erfindung das Verfahren und die Vorrichtung so zu gestalten, daß es/sie zu bestehenden Schneidmethoden kompatibel ist, daß geringe Zusatzkosten verursacht werden und daß es/sie gegebenenfalls in bestehende Schneideanlagen implementiert werden kann.

Die Lösung dieser Aufgabe gelingt gemäß der Erfindung für das Verfahren mit den Schritten:
- Erwärmen des Kunststoffs wenigstens im Bereich einer vorgegebenen Schneidlinie unter Erniedrigung der Viskosität des Kunststoffs,
- Aufsetzen eines einzigen Schneidwerkzeugs auf der Kunststoffseite des Laminats, wobei der Belastungsdruck des Schneidwerkzeugs auf die Oberfläche des Laminats einstellbar ist,
- Erzeugen einer Relativbewegung zwischen Schneidwerkzeug und Laminat entlang der Schneidlinie mit Durchtrennung des Kunststoffs und gleichzeitiger Anritzung des sprödbrüchigen Werkstoffs unter Induzierung einer mechanischen Spannung, und ggf.
- zusätzliche Erhöhung der mechanischen Spannung entlang der Schneidlinie bis über die Bruchfestigkeit des angeritzten sprödbrüchigen Werkstoffs.

Hinsichtlich der Vorrichtung gelingt die Lösung der Aufgabe erfindungsgemäß durch eine Vorrichtung mit:
- Mittel zum Erwärmen des Kunststoffs wenigstens im Bereich einer vorgegebenen Schneidlinie unter Erniedrigung der Viskosität des Kunststoffs,
- einem einzigen Schneidwerkzeug das auf der Kunststoffseite des Laminats aufsetzbar ist, wobei der Belastungsdruck des Schneidwerkzeugs auf die Oberfläche der Laminats einstellbar ist,
- Mittel zum Erzeugen einer Relativbewegung zwischen Schneidwerkzeug und Laminat entlang der Schneidlinie, zwecks Durchtrennen des Künststoffs und gleichzeitigem Anritzen des sprödbrüchigen Werkstoffs unter Induzierung einer mechanischen Spannung, und ggf.
- Mittel zur zusätzlichen Erhöhung der mechanischen Spannung entlang der Schneidlinie bis über die Bruchfestigkeit des angeritzten sprödbrüchigen Werkstoffs.

Durch die erfindungsgemäßen Maßnahmen ist es mit Vorteil möglich, ein Laminat aus einem sprödbrüchigen Werkstoff und einem Kunststoff, insbesondere ein Laminat aus einem einseitig mit Kunststoff laminierten sprödbrüchigen Werkstoff, mit einem einzigen Schneidwerkzeug in einem Arbeitsgang zu schneiden.

Dies ist vorteilhaft, da die Verwendung von zwei gegenüber oder nacheinander geführten Schneidwerkzeugen stets aufwendige und prozeßsensitive Justagearbeiten erforderlich machen, die bei der vorliegenden Lösung entfallen.

Das Schneidwerkzeug muß auf der Kunststoffseite des Laminats geführt werden, um den Kunststoff zuverlässig zu durchtrennen, sowie gleichzeitig den sprödbrüchigen Werkstoff für einen Sprödbruch an der Schnittstelle anritzen zu können.

Um die eingangs erwähnten prinzipiellen Probleme beim mechanischen Schneiden von genannten Laminaten zu lösen, ist es erforderlich, den hohen Belastungsdruck des Schneidwerkzeugs zum Durchtrennen des Kunststoffs abzusenken. Durch Erwärmen des Kunststoffs wenigstens im Bereich einer vorgegebenen Schneidlinie wird dessen Viskosität erheblich erniedrigt, und es genügt bereits ein geringer Belastungsdruck des Schneidwerkzeugs, um den Kunststoff zu durchtrennen.

Die ggf. erforderliche zusätzliche Erhöhung der mechanischen Spannung entlang der Schneidlinie bis über die Bruchfestigkeit des angeritzten sprödbrüchigen Werkstoffs kann beispielsweise durch eine Biegung in Bereich des Anritzes erfolgen, wobei eine spannungsinduzierte Rißwanderung entlang der Schneidlinie stattfindet.

Um ein Laminat aus einem beidseitig mit Kunststoff laminierten sprödbrüchigen Werkstoff zu schneiden, wird der Kunststoff auf jeder Seite des Laminats durchtrennt und der sprödbrüchige Werkstoff entweder einseitig oder zweiseitig angeritzt.
Das Durchtrennen des Kunststoffs und das Anritzen des sprödbrüchigen Werkstoffs kann dabei in einem einzigen Verfahrensschritt mit zwei gegenüberliegend angeordneten Schneidwerkzeugen oder in zwei aufeinanderfolgenden Verfahrensschritten mit wenigstens einem Schneidwerkzeug erfolgen.
Dazu wird der Kunststoff wenigstens im Bereich der vorgegebenen Schneidlinie unter Erniedrigung der Viskosität des Kunststoffs erwärmt, wobei die Erwärmung wenigstens auf der Kunststoffseite des Laminats erfolgt, auf der das Schneidwerkzeug gerade aufgesetzt wird. Das Schneidwerkzeug wird auf einer Kunststoffseite des Laminats aufgesetzt, wobei der Belastungsdruck des Schneidwerkzeugs auf die Oberfläche des Laminats einstellbar ist. Es wird eine Relativbewegung zwischen Schneidwerkzeug und Laminat entlang der Schneidlinie erzeugt, mit Durchtrennung des Kunststoffs auf dieser Seite.
Auf der gegenüberliegenden Kunststoffseite des Laminats wird das Schneidwerkzeug oder ein weiteres, zusätzliches Schneidwerkzeug aufgesetzt, wobei der Belastungsdruck des Schneidwerkzeugs auf die Oberfläche des Laminats einstellbar ist. Zwischen Schneidwerkzeug und Laminat wird entlang der Schneidlinie eine Relativbewegung erzeugt, mit Durchtrennung des Kunststoffs und gleichzeitiger Anritzung des sprödbrüchigen Werkstoffs unter Induzierung einer mechanischen Spannung. Ggf. wird die mechanische Spannung entlang der Schneidlinie bis über die Bruchfestigkeit des angeritzten sprödbrüchigen Werkstoffs zusätzlich erhöht.

Das Schneiden des Laminats aus einem beidseitig mit Kunststoff laminierten sprödbrüchigen Werkstoff bei dem das Durchtrennen des Kunststoffs und das Anritzen des sprödbrüchigen Werkstoffs mit zwei gegenüberliegend angeordneten Schneidwerkzeugen erfolgt, weist folgende Verfahrensschritte auf:
- Erwärmen des Kunststoffs wenigstens im Bereich einer vorgegebenen Schneidlinie unter Erniedrigung der Viskosität des Kunststoffs,
- Aufsetzen jeweils eins Schneidwerkzeuges auf jeder Kunststoffseite des Laminats, wobei der Belastungsdruck des jeweiligen Schneidwerkzeugs auf die Oberfläche des Laminats einstellbar ist,
- Erzeugen einer Relativbewegung zwischen den Schneidwerkzeugen und dem Laminat entlang der Schneidlinie, mit Durchtrennung des Kunststoffs und gleichzeitiger Anritzung des sprödbrüchigen Werkstoffs unter Induzierung einer mechanischen Spannung, wobei der sprödbrüchige Werkstoff einseitig oder beidseitig angeritzt wird, und ggf.
- zusätzliche Erhöhung der mechanische Spannung entlang der Schneidlinie bis über die Bruchfestigkeit des angeritzten sprödbrüchigen Werkstoffs.

Dabei sind die beiden Schneidwerkzeuge bevorzugt direkt gegenüberliegend angeordnet und führen eine synchronisierte Bewegung relativ zum Laminat entlang der Schneidlinie aus.

Werden die beiden Schneidwerkzeuge mit einem Vorlauf zueinander angeordnet, so ist das Schneidwerkzeug, das nur den Kunststoff auf einer Seite des Laminats durchtrennt bevorzugt vorlaufend zum gegenüberliegenden Schneidwerkzeug angeordnet, das den Kunststoff durchtrennt und gleichzeitig den sprödbrüchigen Werkstoff anritzt.

Der Kunststoff wird bevorzugt durch Strahlung, insbesondere Infrarot- und/oder Laserstrahlung und/oder durch einen Heißgasstrahl erwärmt. Dabei kann auch das gesamte Laminat erwärmt werden.

Die Erwärmung des Kunststoffs kann aber auch durch das beheizte Schneidwerkzeug, insbesondere durch dessen beheiztes unteres Ende erfolgen. Dabei kann die Erwärmung des Kunststoffs sowohl allein mittels Wärmeenergieübertragung durch das heiße Schneidwerkzeug wenigstens im Bereich der Schneidlinie als auch zusätzlich zur genannten Erwärmung erfolgen.

Die Erwärmung des Kunststoffs kann sowohl über dessen Erweichungstemperatur hinaus gehen als auch unter dessen Erweichungstemperatur, bevorzugt knapp unter dessen Erweichungstemperatur erfolgen.

Durch Erzeugen einer Relativbewegung zwischen Schneidwerkzeug und Laminat unter Bewegen des Schneidwerkzeugs und/oder Bewegen des Laminats entlang der vorgegebenen Schneidlinie wird der erwärmte Kunststoff durchtrennt.
Des weiteren kann im gleichen Arbeitsgang die Oberfläche des sprödbrüchigen Werkstoffs von dem Schneidwerkzeug angeritzt und eine Sollbruchstelle erzeugt werden. Da die Kunststoffseite des Verbunds nun bereits durchtrennt wurde, ist - durch eine zugspannungsinduzierte Rißwanderung entlang der Sollbruchstelle des sprödbrüchigen Werkstoffs - das Trennen des Laminats gewährleistet. Die dabei erzielbaren Schnittgeschwindigkeiten für das Durchschneiden des Kunststoffs und das gleichzeitige Anritzen des sprödbrüchigen Werkstoffs sind mit denen des konventionellen Glasschneidens vergleichbar.

Durch den aufgeschmolzenen Kunststoffilm an der Schnittstelle kann zusätzlich auf den beim konventionellen Glasschneiden häufig zur Verbesserung der Schnittqualität und der Erhöhung der Standzeit des Schneidwerkzeugs eingesetzten Naßfilm, aus beispielsweise Wasser, Glykol oder Propanol, verzichtet werden.

Einen feinen, für das Durchtrennen des Kunststoffs und das gleichzeitige Anritzen des sprödbrüchigen Werkstoffs geeigneten Schnitt erhält man bevorzugt dadurch, daß das Laminat mit einem Schneidwerkzeug mit einer gefaßten Diamantspitze, mit einem Schneidrad oder mit einer Schneidklinge geschnitten wird.

Diamant als härtestes Mineral eignet sich aufgrund dieser hervorragenden Eigenschaft, im Schneidwerkzeug gefaßt, ganz gleich ob die natürlichen oder die künstlich geschnittenen Kanten zur Wirkung kommen, vorzüglich zum Schneiden des Laminats.

Bevorzugt finden Schneidräder und/oder Schneidklingen Verwendung die aus einer besonders harten und zähen Legierung oder aus einer Keramik, insbesondere aus einem wolframcarbid- und/oder diamanthaltigem Sintermetall bestehen. Die Schneidräder sind bevorzugt keilförmig zugespitzt und am äußeren Rand mit fein eingeschliffenen Facetten versehen.

Durch eine Schwingungsanregung kann das Schneidwerkzeug und besonders dessen unteres Ende in axiale und ggf. auch transversale Schwingungen geringer Amplitude und einstellbarer Frequenz versetzt werden. Das Schneiden wird dadurch verbessert. Eine Verbesserung der Schneidwirkung ist nicht von einer bestimmten Frequenz abhängig. Jedoch hat sich gezeigt, daß höhere Frequenzen durch die höhere Anzahl von Schwingungen pro Zeiteinheit eine bessere Wirkung haben. Bevorzugt ist die Anwendung von Ultraschall, dessen hohe Frequenz mit verhältnismäßig preiswerten Mitteln erzeugt werden kann. Frequenzen im Bereich oberhalb von 100 kHz lassen sich mit den erforderlichen Amplituden nur noch mit verhältnismäßig großem Aufwand erzeugen. Zur Erzeugung des Ultraschalls wird bevorzugt ein Modulator, beispielsweise ein Schwingquarz, oder ein magnetostriktiver Modulator, beispielsweise ein in ein starkes magnetisches Wechselfeld gebrachter Nickelstab, verwendet. Unter dem durch die Ultraschallanregung erzeugten Ultraschall werden Schallwellen mit Frequenzen höher als 16 kHz verstanden. Erfindungsgemäß kommen bevorzugt Schallwellen mit einer Frequenz von 20 kHz bis 100 kHz und einer Amplitude von 5 µm bis 40 µm zum Einsatz. Hierbei bewirken transversal, längs und/oder quer zur Schneidrichtung ausgeführte Schwingungen des Schneidwerkzeugs eine bessere Materialverdrängung des Kunststoffs von der Sollbruchstelle weg. Auf diese Weise wird ein erneutes Zusammenfließen des gerade durchtrennten, noch weichen Kunststoffs verhindert. Die axialen Schwingungen des Schneidwerkzeugs erniedrigen die für das Durchschneiden des Kunststoffs und das gleichzeitige Anritzen des sprödbrüchigen Werkstoffs erforderlichen Vorschub- und Auflagekräfte.

Die erfindungsgemäßen Maßnahmen begünstigen die Schnittqualität und verringem die Gefahr eines unkontrollierten Sprödbruches des sprödbrüchigen Werkstoffs. Sie unterstützen dadurch den Prozeßverlauf und verbessern die erzielbare Ausbeute beim Schneidevorgang bzw. machen diesen überhaupt erst möglich.

Bevorzugt eignet sich das Verfahren bzw. die Vorrichtung zum Schneiden von Laminaten, insbesondere von dünnen Laminaten aus einem sprödbrüchigen Werkstoff, z. B. aus einer Glas-, Glaskeramik- oder Keramikfolie, und aus einem Kunststoff, insbesondere aus einer Kunststoffolie, wobei die Kunststoffolie eine Kratzschutzfolie, bevorzugt eine Kratzschutzfolie aus Polyethylen sein kann, oder aus einem aufgesprühten Polymerfilm.

Prinzipiell eignet sich das Verfahren bzw. die Vorrichtung zum Schneiden von Laminaten aus einem sprödbrüchigen Werkstoff und einem Kunststoff, dessen Viskosität sich mittels Erwärmen durch das Schneidwerkzeug erniedrigen läßt. Geeignete Kunststoffe sind beispielsweise Thermoplaste, besonders geeignet sind z.B. Polyamide, Polycarbonate, Polyethersulfone, Olefin-Kopolymere, Polyethylen-Naphthalene, Polyarylate, Polypentadiene oder Polyethylenterephthalat (PET).

Die Laminate weisen dabei bevorzugt eine Dicke des Kunststoffs von 1 µm bis 300 µm und des sprödbrüchigen Werkstoffs von 10 µm bis 300 µm auf.

Der sprödbrüchige Werkstoff und der Kunststoff sind bevorzugt über eine Kleberschicht kraftschlüssig miteinander verbunden, wobei die Kleberschicht bevorzugt eine Dicke von 2 µm bis 50 µm aufweist.
Alternativ kann der Kunststoff durch Extrusion, durch Gieß-, Sprüh- oder Walzlackierverfahren oder durch Auflaminieren einer Kunststoffolie auf den sprödbrüchigen Werkstoff aufgebracht sein.

Das Verfahren und die Vorrichtung eignen sich aber auch zum Schneiden von Laminaten aus einem relativ dicken sprödbrüchigen Werkstoff, z. B. aus Glas, insbesondere Flachglas, Glaskeramik oder Keramik und aus einem Kunststoff, wobei die Dicke des sprödbrüchigen Werkstoffs vorzugsweise bis zu 30 mm beträgt.

Des weiteren können auch genannte Laminate geschnitten werden bei denen der sprödbrüchige Werkstoff beispielsweise aus Silizium, Germanium oder Kohlenstoff besteht.

Die Erzeugung einer einwandfreien Schnittlinie und besonders einer einwandfreien Ritzbahn erfordert eine bestimmte Anordnung des Schneidwerkzeugs. Der Winkel zwischen der Längsachse des Schneidwerkzeugs und der Schneidebene in Schneidrichtung ist bevorzugt im Bereich von 55° bis 75° einstellbar. Besonders bevorzugt beträgt der Winkel 65°.

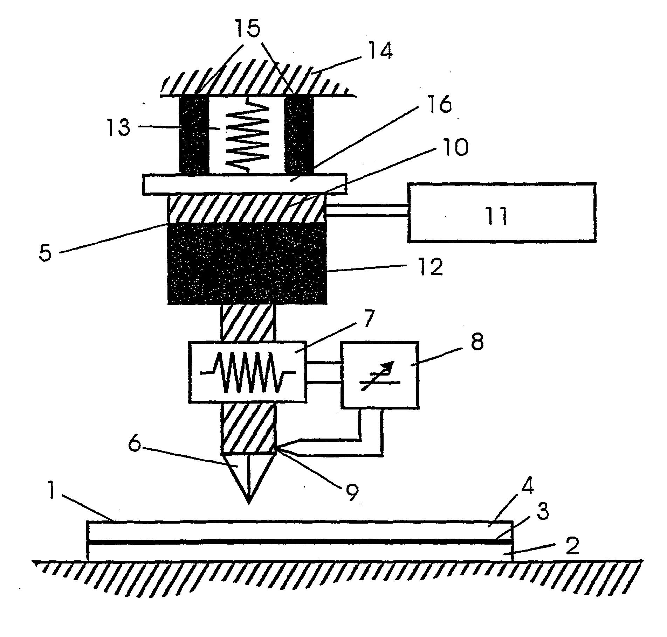

Das folgende Beispiel soll anhand der einzigen Zeichnung die Erfindung weiter verdeutlichen.

Die Zeichnung zeigt eine bevorzugte Vorrichtung zum Schneiden eines Laminats 1 aus einem sprödbrüchigen Werkstoff 2 und einem Kunststoff 4 mit einem Schneidwerkzeug 5 in einem Arbeitsgang. Bei dem dargestellten Laminat 1 handelt es sich beispielsweise um ein dünnes Glas-Kunststoff-Laminat, wobei die vorzugsweise 10 µm bis 300 µm dicke Glasfolie 2 und die 1 µm bis 300 µm dicke Kunststoffolie 4 mittels einer 2 µm bis 50 µm dicken Kleberschicht 3 kraftschlüssig miteinander verbunden sind.

Das beheizbare Schneidwerkzeug 5 ist auf der Kunststoffseite 4 des Glas-Kunststoff-Laminats 1 aufsetzbar, wobei der Belastungsdruck des Schneidwerkzeugs 5 auf die Oberfläche des Glas-Kunststoff-Laminats 1 durch geeignete Mittel, wie beispielsweise Federelemente 13, einstellbar ist. Der jeweilige Belastungsdruck kann leicht experimentell festgestellt werden, und entspricht in der Regel dem Belastungsdruck, der zum Ritzen des reinen sprödbrüchigen Werkstoffs entsprechender Dicke erforderlich ist. Das untere Ende 6 des beheizbaren Schneidwerkzeugs 5 besteht aus einem gefaßten keilförmigen Diamanten, der sich zur Erzeugung besonders feiner Schnittlinien eignet. Mittels eines elektrischen Heizelements 7 läßt sich das Schneidwerkzeug 5 und besonders bevorzugt dessen unteres Ende 6 auf die zum Schneiden des jeweiligen Kunststoffs 4 notwendige Temperatur bringen.

Bevorzugt wird das elektrische Heizelement 7 über eine Heizspannungseinrichtung 8 geregelt, wobei in einer besonders bevorzugten Ausführung eine automatische Temperaturüberwachung und -steuerung über ein, möglichst in der Nähe des unteren Endes 6 des Schneidwerkzeugs 5 angebrachtes Thermoelement 9, das mit der Heizspannungseinrichtung 8 verbunden ist, erfolgt. So läßt sich eine zum Schneiden eines bestimmten Kunststoffs 4 notwendige Temperatur des Schneidwerkzeugs 5 einstellen und regeln.

Es ist vorteilhaft, die zum Schneiden des jeweiligen Kunststoffs 4 notwendige Temperatur des Schneidwerkzeugs 5 bzw. zumindest die Temperatur dessen unteren Endes 6 während des Schneidens konstant zu halten.

Die jeweilige Temperatur des Schneidwerkzeugs 5 und besonders dessen unteren Endes 6 läßt sich ebenfalls einfach experimentell feststellen. Als Anhaltspunkt kann die Erweichungstemperatur des jeweils zu schneidenden Kunststoffs 4, bzw. eine Temperatur die etwas über der Erweichungstemperatur liegt, herangezogen werden. Dabei kann die Temperatur des Schneidwerkzeugs 5 und besonders die Temperatur dessen unteren Endes 6 um so höher sein, je höher die Schnittgeschwindigkeit ist, um eine erforderliche Wärmeenergieübertragung auf den jeweils zu schneidenden Kunststoff 4 zu ermöglichen. Die Viskosität des Kunststoffs 4 sollte durch das Erwärmen des Kunststoffs 4 durch das Schneidwerkzeug 5 soweit erniedrigt werden, daß der zum gleichzeitigen Anritzen des Glases 2 notwendige Belastungsdruck nicht oder kaum überschritten wird.

Durch Mittel (nicht dargestellt) die bevorzugt eine Strahlungsquelle, insbesondere eine Wärmequelle, z.B. einen Infrarot- oder Laserstrahler, oder eine Heißgasstrahlquelle enthalten kann der Kunststoff zusätzlich aber auch alleine wenigstens im Bereich der vorgegebenen Schneidlinie erwärmt werden.

In einer weiteren Ausgestaltung der Erfindung werden die Mittel zur Erwärmung so geführt, daß zumindest entlang der Schneidlinie eine lokale Erwärmung des Kunststoffs stattfindet. Bevorzugt werden die Mittel zum Erwärmen gemeinsam mit dem Schneidwerkzeug und diesem voranlaufend geführt. Dabei können die genannten Mittel sowohl allein zur Erwärmung des Kunststoffs eingesetzt werden - ein Erwärmen durch das Schneidwerkzeug ist dann nicht erforderlich - als auch zur zusätzlichen Erwärmung durch das beheizte Schneidwerkzeug eingesetzt werden.

Das Schneidwerkzeug 5 ist über eine Aufhängung 14 mit Fühungsetementen 15 verbunden, die ein Bewegen des Schneidwerkzeugs 5 entlang einer beliebigen, vorgegebenen Schneidlinie entlang des Glas-Kunststoff-Laminats 1 ermöglichen, wobei die Bewegung sowohl manuell als auch maschinell erfolgen kann.

Durch Bewegen des beheizten Schneidwerkzeugs 5 entlang der vorgegebenen Schneidlinie wird der Kunststoff 4 samt Kleberschicht 3 durchtrennt und gleichzeitig das darunterliegende, mit dem Kunststoff 4 verbundene Glas 2 unter Induzierung einer mechanischen Spannung entlang der Schneidlinie angeritzt und bei dünnen Laminaten durchtrennt.

Ggf. erfolgt eine weitere Erhöhung der mechanischen Spannung entlang der Schneidlinie durch zusätzliche Mittel (nicht dargestellt) bis über die Bruchfestigkeit des Glases 2. Auf diese Weise wird eine Rißwanderung entlang der Schneidlinie, das sogenannte Brechen des Glases erreicht. Dabei wird entlang der Anritzspur mit ihrer darunterliegenden Kette von feinem Anrissen im wesentlichen durch eine Biegezugbelastung der Bruch durchgeführt.

Beispielsweise wird zumindest das untere Ende des Schneidwerkzeugs auf etwa 200°C erwärmt, um ein flaches Glas-Kunststoff-Laminat aus einer 50 bis 400 µm dicken Glasfolie, die mit einer 50 µm dicken Kunststoffolie aus Polyethylenterephthalat (PET) verbunden ist, zu schneiden. Dabei wird ein Belastungsdruck von etwa 1 N bei einer Schnittgeschwindigkeit von etwa 10 m/min eingestellt.

Die Erfindung beschränkt sich nicht nur auf das Anbringen von geraden Schnitten, vielmehr lassen sich auch gekrümmte Schnitte verwirklichen.

In einer bevorzugten Ausführung der Erfindung läßt sich das Schneidwerkzeug 5 und besonders bevorzugt dessen unteres Ende 6 durch einen piezo- oder magnetostriktiven Modulator 10 und ein Ankopplungselement 12 zu zum Schneidewerkzeug 5 axialen und/oder transversalen (längs und/oder quer zur Schneidrichtung) Ultraschallschwingungen geringer Amplitude, bevorzugt einer Amplitude von 5 µm bis 40 µm und einstellbarer Frequenz anregen. Über einen Funktionsgenerator 11 läßt sich die Frequenz der Ultraschallschwingung einstellen, wobei mit Frequenzen im Bereich von 20 kHz bis 100 kHz gute Schnitte erzielt wurden.

Bevorzugt läßt sich das Schneidwerkzeug durch zumindest ein Achselement 16 zur Schneidebene in Schneidrichtung senkrecht und parallel schwenkbar einstellen, wobei der Winkel zwischen Längsachse des Schneidwerkzeugs 5 und der Schneidebene in Schneidrichtung im Bereich von 55° bis 75° einstellbar ist und bevorzugt 65° beträgt.

Die Erfindung ist des weiteren nicht auf das Schneiden von flachen Laminaten beschränkt, so lassen sich auch von der flachen Form abweichende Laminate, beispielsweise gewölbte Verbundwerkstücke, z.B. kunststoffbeschichtete Autoscheiben oder Spiegel, aber auch Verbundwerkstücke aus kunststoffbeschichtetem Hohlglas vorteilhaft schneiden.

Das erfindungsgemäße Verfahren und die erfindungsgemäße Vorrichtung ist zu den bestehenden mechanischen Glasschneidemethoden kompatibel, und kann ohne großen Aufwand in bestehende Verfahren und Vorrichtungen integriert werden. Laminate aus einem sprödbrüchigen Werkstoff und einem Kunststoff können nach dem Verfahren bzw. mit der Vorrichtung erstmals mit einem Schneidwerkzeug in einem Arbeitsgang mit hoher Geschwindigkeit geschnitten werden. Schnittgenauigkeit und Konturtreue reichen an die bekannten Verfahren zum Schneiden von sprödbrüchigen Werkstoffen oder von reinen Kunststoffen heran.
Eine bevorzugte Anwendung ist das Schneiden von dünnen Glas- bzw. Glaskeramik-Kunststoff-Laminaten, wobei das Glas bzw. die Glaskeramik bevorzugt 10 µm bis 300 µm und der Kunststoff 1 µm bis 300 µm dick ist.

### Bezugszeichenliste

- 1: Laminat
- 2: sprödbrüchiger Werkstoff
- 3: Kleberschicht
- 4: Kunststoff
- 5: Schneidwerkzeug
- 6: unteres Ende des Schneidwerkzeugs
- 7: Heizelement
- 8: Heizspannungseinrichtung
- 9: Thermoelement
- 10: Piezo- oder magnetostriktiver Modulator
- 11: Funktionsgenerator
- 12: Ankoppelelement
- 13: Federelemente
- 14: Aufhängung
- 15: Führungselement
- 16: Achselement

## Patentansprüche

1. Verfahren zum Schneiden eines Laminats aus einem sprödbrüchigen Werkstoff und einem Kunststoff mit einem einzigen Schneidwerkzeug,
**gekennzeichnet durch**
die Schritte:
- Erwärmen des Kunststoffs wenigstens im Bereich einer vorgegebenen Schneidlinie unter Erniedrigung der Viskosität des Kunststoffs,
- Aufsetzen des Schneidwerkzeugs auf der Kunststoffseite des Laminats, wobei der Belastungsdruck des Schneidwerkzeugs auf die Oberfläche des Laminats einstellbar ist,
- Erzeugen einer Relativbewegung zwischen Schneidwerkzeug und Laminat entlang der Schneidlinie mit Durchtrennung des Kunststoffs und gleichzeitiger Anritzung des sprödbrüchigen Werkstoffs unter Induzierung einer mechanischen Spannung, und ggf.
- zusätzliche Erhöhung der mechanischen Spannung entlang der Schneidlinie bis über die Bruchfestigkeit des angeritzten sprödbrüchigen Werkstoffs.

2. Verfahren zum Schneiden eines Laminats aus einem beidseitig mit Kunststoff laminierten sprödbrüchigen Werksstoff,
**dadurch gekennzeichnet,**
- **dass** der Kunststoff wenigstens im Bereich einer vorgegebenen Schneidlinie unter Erniedrigung der Viskosität des Kunststoffs erwärmt wird,
- auf jeder Kunststoffseite des Laminats jeweils ein Schneidwerkzeug aufgesetzt wird, wobei der Belastungsdruck des jeweiligen Schneidwerkzeugs auf die Oberfläche des Laminats einstellbar ist,
- eine Relativbewegung zwischen den Schneidwerkzeugen und dem Laminat entlang der Schneidlinie erzeugt wird, mit Durchtrennung des Kunststoffs und gleichzeitiger Anritzung des sprödbrüchigen Werkstoffs unter Induzierung einer mechanischen Spannung, wobei der sprödbrüchige Werkstoff einseitig oder beidseitig angeritzt wird, und ggf.
- die mechanische Spannung entlang der Schneidlinie bis über die Bruchfestigkeit des angeritzten sprödbrüchigen Werkstoffs zusätzlich erhöht wird.

3. Verfahren nach einem der Ansprüche 1 oder 2,
**dadurch gekennzeichnet,**
**dass** die Erwärmung durch Strahlung, insbesondere Infrarot- und/oder Laserstrahlung oder durch einen Heißgasstrahl erfolgt.

4. Verfahren nach mindestens einem der Ansprüche 1 bis 3,
**dadurch gekennzeichnet,**
**dass** die Erwärmung durch das beheizte Schneidwerkzeug, insbesondere durch dessen beheiztes unteres Ende erfolgt.

5. Verfahren nach mindestens einem der Ansprüche 1 bis 4,
**dadurch gekennzeichnet,**
**dass** das gesamte Laminat erwärmt wird.

6. Verfahren nach mindestens einem der Ansprüche 1 bis 5,
**dadurch gekennzeichnet,**
**dass** das Laminat mit einer gefaßten Diamantspitze des Schneidwerkzeugs geschnitten wird.

7. Verfahren nach mindestens einem der Ansprüche 1 bis 6,
**dadurch gekennzeichnet,**
**dass** das Laminat mit einem Schneidrad und/oder einer Schneidklinge des Schneidwerkzeugs geschnitten wird.

8. Verfahren nach Anspruch 7,
**dadurch gekennzeichnet,**
**dass** ein Schneidrad oder eine Schneidklinge aus einem Hartmetall oder aus einer Keramik, insbesondere aus einem wolframcarbid- und/oder diamanthaltigen Sintermetall eingesetzt werden.

9. Verfahren nach mindestens einem der Ansprüche 1 bis 8,
**dadurch gekennzeichnet,**
**dass** das Schneidwerkzeug, insbesondere dessen unteres Ende axiale Ultraschallschwingungen ausführt.

10. Verfahren nach mindestens einem der Ansprüche 1 bis 9,
**dadurch gekennzeichnet,**
**dass** das Schneidwerkzeug, insbesondere dessen unteres Ende transversale Ultraschallschwingungen längs und/oder quer zur Schneidrichtung ausführt.

11. Verfahren nach mindestens einem der Ansprüche 9 oder 10,
**dadurch gekennzeichnet,**
**dass** die Ultraschallschwingungen geringe Amplituden, insbesondere Amplituden von 5 µm bis 40 µm aufweisen.

12. Verfahren nach mindestens einem der Ansprüche 9 bis 11,
**dadurch gekennzeichnet,**
**dass** Frequenzen der Ultraschallschwingungen im Bereich von 20 kHz bis 100 kHz eingesetzt werden.

13. Verfahren nach mindestens einem der Ansprüche 1 bis 12,
**dadurch gekennzeichnet,**
**dass** als Kunststoff eine Kunststofffolie oder ein aufgesprühter Polymerfilm verwendet wird.

14. Verfahren nach Anspruch 13,
**dadurch gekennzeichnet,**
**dass** eine Kunststofffolie aus Polyethylen oder Polycarbonat verwendet wird.

15. Verfahren nach mindestens einem der Ansprüche 1 bis 14,
**dadurch gekennzeichnet,**
**dass** der Kunststoff eine Dicke von 1 µm bis 300 µm aufweist.

16. Verfahren nach mindestens einem der Ansprüche 1 bis 15,
**dadurch gekennzeichnet,**
**dass** als sprödbrüchiger Werkstoff Glas, insbesondere Flachglas, Glaskeramik oder Keramik eingesetzt wird.

17. Verfahren nach Anspruch 16,
**dadurch gekennzeichnet,**
**dass** der sprödbrüchige Werkstoff eine Dicke von bis zu 30 mm aufweist.

18. Verfahren nach mindestens einem der Ansprüche 1 bis 17,
**dadurch gekennzeichnet,**
**dass** als sprödbrüchiger Werkstoff eine Glas-, Glaskeramik- oder Keramikfolie eingesetzt wird.

19. Verfahren nach Anspruch 18,
**dadurch gekennzeichnet,**
**dass** der sprödbrüchige Werkstoff eine Dicke von 10 µm bis 300 µm aufweist.

20. Verfahren nach mindestens einem der Ansprüche 1 bis 19,
**dadurch gekennzeichnet,**
**dass** der sprödbrüchige Werkstoff und der Kunststoff über eine Kleberschicht kraftschlüssig miteinander verbunden sind.

21. Verfahren nach Anspruch 20,
**dadurch gekennzeichnet,**
**dass** die Kleberschicht eine Dicke von 2 µm bis 50 µm aufweist.

22. Verfahren nach mindestens einen der Ansprüche 1 bis 21,
**dadurch gekennzeichnet,**
**dass** der Kunststoff durch Extrusion, durch Gieß-, Sprüh- oder Walzlackierverfahren oder durch Auflaminieren einer Kunststofffolie auf den sprödbrüchigen Werkstoff aufgebracht wird.

23. Vorrichtung zum Schneiden eines Laminats aus einem sprödbrüchigen Werkstoff und einem Kunststoff mit einem einzigen Schneidwerkzeug,
**gekennzeichnet durch:**
- Mittel zum Erwärmen des Kunststoffs wenigstens im Bereich einer vorgegebenen Schneidlinie unter Erniedrigung der Viskosität des Kunststoffs,
- ein einziges Schneidwerkzeug das auf der Kunststoffseite des Laminats aufsetzbar ist, wobei der Belastungsdruck des Schneidwerkzeugs auf die Oberfläche des Laminats einstellbar ist,
- Mittel zum Erzeugen einer Relativbewegung zwischen Schneidwerkzeug und Laminat entlang der Schneidlinie, zwecks Durchtrennen des Kunststoffs und gleichzeitigem Anritzen des sprödbrüchigen Werkstoffs unter Induzierung einer mechanischen Spannung, und ggf.
- Mittel zur zusätzlichen Erhöhung der mechanischen Spannung entlang der Schneidlinie bis über die Bruchfestigkeit des angeritzten sprödbrüchigen Werkstoffs.

24. Vorrichtung nach Anspruch 23,
**dadurch gekennzeichnet,**
**dass** die Mittel zum Erwärmen des Kunststoffs eine Strahlungsquelle, insbesondere eine Wärmequelle, z.B. einen Infrarot- und/oder Laserstrahler, und/oder eine Heißgasstrahlquelle enthalten.

25. Vorrichtung nach Anspruch 23 oder 24,
**dadurch gekennzeichnet,**
**dass** das Schneidwerkzeug, insbesondere dessen unteres Ende beheizbar ist.

26. Vorrichtung nach mindestens einem der Ansprüche 23 bis 25,
**dadurch gekennzeichnet,**
**dass** das untere Ende des Schneidwerkzeugs aus einem gefassten Diamanten besteht.

27. Vorrichtung nach mindestens einem der Ansprüche 23 bis 26,
**dadurch gekennzeichnet,**
**dass** die Spitze des Schneidwerkzeugs aus einem Schneidrad und/oder einer Schneidklinge aus einem Hartmetall oder aus einer Keramik, insbesondere aus einem wolframcarbid- und oder diamanthaltigen Sintermetall besteht.

28. Vorrichtung nach mindestens einem der Ansprüche 23 bis 27,
**dadurch gekennzeichnet,**
**dass** das Schneidwerkzeug, insbesondere dessen unteres Ende über einen piezo- oder magnetostriktiven Modulator und ein Koppelelement in einer zum Schneidwerkzeug axialen Richtung zu Ultraschallschwingungen angeregt ist.

29. Vorrichtung nach mindestens einem der Ansprüche 23 bis 28,
**dadurch gekennzeichnet,**
**dass** das Schneidwerkzeug, insbesondere dessen unteres Ende über einen piezo- oder magnetostriktiven Modulator und ein Koppelelement in einer zum Schneidwerkzeug transversalen Richtung zu Ultraschallschwingungen quer zur Schneidrichtung angeregt ist.

30. Vorrichtung nach mindestens einem der Ansprüche 23 bis 29,
**dadurch gekennzeichnet,**
**dass** das Schneidwerkzeug, insbesondere dessen unteres Ende über einen piezo- oder magnetostriktiven Modulator und ein Koppelelement in einer zum Schneidwerkzeug transversalen Richtung zu Ultraschallschwingungen längs zur Schneidrichtung angeregt ist.

31. Vorrichtung nach mindestens einem der Ansprüche 28 bis 30,
**dadurch gekennzeichnet,**
**dass** die Amplituden und die Frequenzen der Ultraschallschwingungen steuer- und regelbar sind.

32. Vorrichtung nach Anspruch 31,
**dadurch gekennzeichnet,**
**dass** die Amplituden der Ultraschallschwingungen im Bereich von 5 µm bis 40 µm und die Frequenzen der Ultraschallschwingungen im Bereich von 20 kHz bis 100 kHz liegen.

33. Vorrichtung nach mindestens einem der Ansprüche 23 bis 32,
**dadurch gekennzeichnet,**
**dass** die Mittel zum Erwärmen des Kunststoffs durch das Schneidwerkzeug zumindest ein Heizelement, ein Thermoelement und eine Heizspannungseinrichtung umfassen.

34. Vorrichtung nach mindestens einem der Ansprüche 23 bis 33,
**dadurch gekennzeichnet,**
**dass** das Schneidwerkzeug durch zumindest ein Achselement zur Schneidebene mindestens in Schneidrichtung senkrecht und parallel schwenkbar ist.

## Claims

1. Method of cutting a laminate made of a brittle material and a plastic with a cutting tool, **characterized by** the steps of:
- heating-up the plastic at least in the region of a predetermined cutting line, thereby lowering the viscosity of the plastic,
- placing the cutting tool onto the plastic side of the laminate, the loading pressure of the cutting tool on the surface of the laminate being adjustable,
- producing a relative movement between cutting tool and laminate along the cutting line, with severing of the plastic and simultaneous scoring of the brittle material, thereby inducing a mechanical stress, and if appropriate
- additionally increasing the mechanical stress along the cutting line to beyond the rupture strength of the scored brittle material.

2. Method for cutting a laminate made of a brittle material laminated on both sides with plastic, **characterized in that**
- the plastic is heated up at least in the region of a predetermined cutting line, thereby lowering the viscosity of the plastic,
- a cutting tool is respectively placed on each side of the plastic of the laminate, the loading pressure of the respective cutting tool on the surface of the laminate being adjustable,
- a relative movement is produced between the cutting tools and the laminate along the cutting line, with severing of the plastic and simultaneous scoring of the brittle material, thereby inducing a mechanical stress, the brittle material being scored on one side or on both sides, and if appropriate
- the mechanical stress is additionally increased along the cutting line to beyond the rupture strength of the scored brittle material.

3. Method according to one of Claims 1 or 2, **characterized in that** the heating-up is performed by radiation, in particular a infrared and/or laser radiation or by a hot-gas jet.

4. Method according to at least one of Claims 1 to 3, **characterized in that** the heating-up is performed by the heated cutting tool, in particular by its heated lower end.

5. Method according to at least one of Claims 1 to 4, **characterized in that** the entire laminate is heated up.

6. Method according to at least one of Claims 1 to 5, **characterized in that** the laminate is cut by a mounted diamond tip of the cutting tool.

7. Method according to at least one of Claims 1 to 6, **characterized in that** the laminate is cut by a cutting wheel and/or a cutting blade of the cutting tool.

8. Method according to Claim 7, **characterized in that** a cutting wheel or a cutting blade made of a hard metal or of a ceramic, in particular a tungsten-carbide and/or diamond-containing sintered metal, is used.

9. Method according to at least one of Claims 1 to 8, **characterized in that** the cutting tool, in particular its lower end, executes axial ultrasonic vibrations.

10. Method according to at least one of Claims 1 to 9, **characterized in that** the cutting tool, in particular its lower end, executes transverse ultrasonic vibrations longitudinally and/or transversely with respect to the cutting direction.

11. Method according to at least one of Claims 9 or 10, **characterized in that** the ultrasonic vibrations have low amplitudes, in particular amplitudes of from 5 µm to 40 µm.

12. Method according to least one of Claims 9 to 11, **characterized in that** frequencies of the ultrasonic vibrations in the range from 20 kHz to 100 kHz are used.

13. Method according to at least one of Claims 1 to 12, **characterized in that** a plastic film or a sprayed-on polymer film is used as the plastic.

14. Method according to Claim 13, **characterized in that** a plastic film made of polyethylene or polycarbonate is used.

15. Method according to at least one of Claims 1 to 14, **characterized in that** the plastic has a thickness of from 1 µm to 300 µm.

16. Method according to at least one of Claims 1 to 15, **characterized in that** glass, in particular flat glass, glass ceramic or ceramic is used as the brittle material.

17. Method according to Claim 16, **characterized in that** the brittle material has a thickness of up to 30 mm.

18. Method according to at least one of Claims 1 to 17, **characterized in that** a glass, glass-ceramic or ceramic sheet is used as the brittle material.

19. Method according to Claim 18, **characterized in that** the brittle material has a thickness of from 10 µm to 300 µm.

20. Method according to at least one of Claims 1 to 19, **characterized in that** the brittle material and the plastic are bonded to one another by means of a layer of adhesive.

21. Method according to Claim 20, **characterized in that** the layer of adhesive has a thickness of from 2 µm to 50 µm.

22. Method according to at least one of Claims 1 to 21, **characterized in that** the plastic is applied to the brittle material by extrusion, by a casting, spraying or roller-coating method or by laminating-on a plastic film.

23. Apparatus for cutting a laminate made of a brittle material and a plastic with a cutting tool, **characterized by**:
- means of heating-up the plastic at least in the region of a predetermined cutting line, thereby lowering the viscosity of the plastic,
- a single cutting tool which can be placed onto the plastic side of the laminate, the loading pressure of the cutting tool on the surface of the laminate being adjustable,
- means for producing a relative movement between cutting tool and laminate along the cutting line, for the purpose of severing the plastic and simultaneously scoring the brittle material, thereby inducing a mechanical stress, and if appropriate
- means for additionally increasing the mechanical stress along the cutting line to beyond the rupture strength of the scored brittle material.

24. Apparatus according to Claim 23, **characterized in that** the means for heating-up the plastic include a radiation source, in particular a heat source, for example an infrared and/or laser heater, and/or a hot-gas jet source.

25. Apparatus according to Claim 23 or 24, **characterized in that** the cutting tool, in particular its lower end, is heatable.

26. Apparatus according to at least one of Claims 23 to 25, **characterized in that** the lower end of the cutting tool comprises a mounted diamond.

27. Apparatus according to at least one of Claims 23 to 26, **characterized in that** the tip of the cutting tool comprises a cutting wheel and/or a cutting blade made of a hard metal or of a ceramic, in particular a tungsten-carbide and/or diamond-containing sintered metal.

28. Apparatus according to at least one of Claims 23 to 27, **characterized in that** the cutting tool, in particular its lower end, is induced to undergo ultrasonic vibrations in a direction axial to the cutting tool by means of a piezo- or magnetostrictive modulator and a coupling element.

29. Apparatus according to at least one of Claims 23 to 28, **characterized in that** the cutting tool, in particular its lower end, is induced to undergo ultrasonic vibrations transversely to the cutting direction, in a direction transversal to the cutting tool, by means of a piezo- or magnetostrictive modulator and a coupling element.

30. Apparatus according to at least one of Claims 23 to 29, **characterized in that** the cutting tool, in particular its lower end, is induced to undergo ultrasonic vibrations longitudinally to the cutting direction, in a direction transversal to the cutting tool, by means of a piezo- or magnetostrictive modulator and a coupling element.

31. Apparatus according to at least one of Claims 28 to 30, **characterized in that** the amplitudes and the frequencies of the ultrasonic vibrations are controllable in an open-loop and closed-loop manner.

32. Apparatus according to Claim 31, **characterized in that** the amplitudes of the ultrasonic vibrations lie in the range from 5 µm to 40 µm and the frequencies of the ultrasonic vibrations lie in the range from 20 kHz to 100 kHz.

33. Apparatus according to at least one of Claims 23 to 32, **characterized in that** the means for heating-up the plastic by the cutting tool comprise at least one heating element, one thermocouple and one heating-voltage device.

34. Apparatus according to at least one of Claims 23 to 33, **characterized in that** the cutting tool can be pivoted by at least one axial element perpendicularly and parallel to the cutting plane, at least in the cutting direction.

## Revendications

1. Procédé pour couper un laminé en une matière fragile et une matière plastique avec un seul outil de coupe, **caractérisé par** les étapes de:
- chauffage de la matière plastique au moins dans la région d'une ligne de coupe prédéterminée avec abaissement de la viscosité de la matière plastique,
- application de l'outil de coupe sur la face de matière plastique du laminé, la pression d'application de l'outil de coupe sur la surface du laminé étant réglable,
- production d'un mouvement relatif entre l'outil de coupe et le laminé le long de la ligne de coupe avec coupe de la matière plastique et rayage simultané de la matière fragile avec instauration d'une contrainte mécanique, et éventuellement
- accroissement supplémentaire de la contrainte mécanique le long de la ligne de coupe jusqu'au-delà de la résistance à la rupture de la matière fragile rayée.

2. Procédé pour couper un laminé en une matière fragile lamellée sur les deux faces avec une matière plastique, **caractérisé en ce que**
- on chauffe la matière plastique au moins dans la région d'une ligne de coupe prédéterminée avec abaissement de la viscosité de la matière plastique,
- on applique un outil de coupe respectivement sur chaque face de matière plastique du laminé, la pression d'application de l'outil de coupe respectif sur la surface du laminé étant réglable,
- on produit un mouvement relatif entre les outils de coupe et le laminé le long de la ligne de coupe, avec coupe de la matière plastique et rayage simultané de la matière fragile, avec instauration d'une contrainte mécanique, la matière fragile étant rayée sur une face ou sur les deux faces, et éventuellement
- on accroît en plus la contrainte mécanique le long de la ligne de coupe jusqu'au-delà de la résistance à la rupture de la matière fragile rayée.

3. Procédé selon l'une quelconque des revendications 1 ou 2, **caractérisé en ce que** le chauffage est effectué par rayonnement, en particulier par rayonnement infrarouge et/ou laser ou par un jet de gaz chaud.

4. Procédé selon au moins une des revendications 1 à 3, **caractérisé en ce que** le chauffage est effectué par l'outil de coupe chauffé, en particulier par son extrémité inférieure chauffée.

5. Procédé selon au moins une des revendications 1 à 4, **caractérisé en ce que** tout le laminé est chauffé.

6. Procédé selon au moins une des revendications 1 à 5, **caractérisé en ce que** le laminé est coupé avec une pointe de diamant sertie de l'outil de coupe.

7. Procédé selon au moins une des revendications 1 à 6, **caractérisé en ce que** le laminé est coupé avec une molette de coupe et/ou une lame de coupe de l'outil de coupe.

8. Procédé selon la revendication 7, **caractérisé en ce que** l'on emploie une molette de coupe ou une lame de coupe en un métal dur ou en une céramique, en particulier en un métal fritté contenant du carbure de tungstène et/ou du diamant.

9. Procédé selon au moins une des revendications 1 à 8, **caractérisé en ce que** l'outil de coupe, en particulier son extrémité inférieure, effectue des oscillations ultrasoniques axiales.

10. Procédé selon au moins une des revendications 1 à 9, **caractérisé en ce que** l'outil de coupe, en particulier son extrémité inférieure, effectue des oscillations ultrasoniques transversales suivant et/ou transversalement à la direction de coupe.

11. Procédé selon au moins une des revendications 9 ou 10, **caractérisé en ce que** les oscillations ultrasoniques présentent de faibles amplitudes, en particulier des amplitudes de 5 µm à 40 µm.

12. Procédé selon au moins une des revendications 9 à 11, **caractérisé en ce que** l'on utilise des fréquences des oscillations ultrasoniques dans le domaine de 20 kHz à 100 kHz.

13. Procédé selon au moins une des revendications 1 à 12, **caractérisé en ce que** l'on utilise comme matière plastique une feuille de matière plastique ou un film polymère déposé par pulvérisation.

14. Procédé selon la revendication 13, **caractérisé en ce que** l'on utilise une feuille de matière plastique en polyéthylène ou en polycarbonate.

15. Procédé selon au moins une des revendications 1 à 14, **caractérisé en ce que** la matière plastique présente une épaisseur de 1 µm à 300 µm.

16. Procédé selon au moins une des revendications 1 à 15, **caractérisé en ce que** l'on utilise comme matière fragile du verre, en particulier du verre plat, une vitrocéramique ou une céramique.

17. Procédé selon la revendication 16, **caractérisé en ce que** la matière fragile présente une épaisseur pouvant atteindre 30 mm.

18. Procédé selon au moins une des revendications 1 à 17, **caractérisé en ce que** l'on utilise comme matière fragile une feuille de verre, de vitrocéramique ou de céramique.

19. Procédé selon la revendication 18, **caractérisé en ce que** la matière fragile présente une épaisseur de 10 µm à 300 µm.

20. Procédé selon au moins une des revendications 1 à 19, **caractérisé en ce que** la matière fragile et la matière plastique sont assemblées par force l'une à l'autre par l'intermédiaire d'une couche adhésive.

21. Procédé selon la revendication 20, **caractérisé en ce que** la couche adhésive présente une épaisseur de 2 µm à 50 µm.

22. Procédé selon au moins une des revendications 1 à 21, **caractérisé en ce que** la matière plastique est appliquée sur la matière fragile par extrusion, par un procédé de coulée, de pulvérisation ou de laquage au rouleau ou par laminage d'une feuille de matière plastique.

23. Dispositif pour couper un laminé en une matière fragile et une matière plastique avec un seul outil de coupe, **caractérisé par**:
- des moyens pour chauffer la matière plastique au moins dans la région d'une ligne de coupe prédéterminée avec abaissement de la viscosité de la matière plastique,
- un seul outil de coupe qui peut être appliqué sur la face de matière plastique du laminé, la pression d'application de l'outil de coupe sur la surface du laminé étant réglable,
- des moyens pour produire un mouvement relatif entre l'outil de coupe et le laminé le long de la ligne de coupe, afin de couper la matière plastique et simultanément de rayer la matière fragile, avec instauration d'une contrainte mécanique, et éventuellement
- des moyens pour accroître davantage la contrainte mécanique le long de la ligne de coupe jusqu'au-delà de la résistance à la rupture de la matière fragile rayée.

24. Dispositif selon la revendication 23, **caractérisé en ce que** les moyens pour chauffer la matière plastique comprennent une source de rayonnement, en particulier une source de chaleur, par exemple une source de rayonnement infrarouge et/ou laser, et/ou une source de jet de gaz chaud.

25. Dispositif selon la revendication 23 ou 24, **caractérisé en ce que** l'outil de coupe, en particulier son extrémité inférieure, est chauffant.

26. Dispositif selon au moins une des revendications 23 à 25, **caractérisé en ce que** l'extrémité inférieure de l'outil de coupe est constituée d'un diamant serti.

27. Dispositif selon au moins une des revendications 23 à 26, **caractérisé en ce que** la pointe de l'outil de coupe est constituée d'une molette de coupe et/ou d'une lame de coupe en un métal dur ou en une céramique, en particulier en un métal fritté contenant du carbure de tungstène ou du diamant.

28. Dispositif selon au moins une des revendications 23 à 27, **caractérisé en ce que** l'outil de coupe, en particulier son extrémité inférieure, est mis en état d'excitation en oscillations ultrasoniques dans une direction axiale par rapport à l'outil de coupe, par l'intermédiaire d'un modulateur piézo- ou magnétostrictif et d'un élément de couplage.

29. Dispositif selon au moins une des revendications 23 à 28, **caractérisé en ce que** l'outil de coupe, en particulier son extrémité inférieure, est mis en état d'excitation en oscillations ultrasoniques transversalement à la direction de coupe dans une direction transversale par rapport à l'outil de coupe, par l'intermédiaire d'un modulateur piézo- ou magnétostrictif et d'un élément de couplage.

30. Dispositif selon au moins une des revendications 23 à 29, **caractérisé en ce que** l'outil de coupe, en particulier son extrémité inférieure, est mis en état d'excitation en oscillations ultrasoniques suivant la direction de coupe dans une direction transversale par rapport à l'outil de coupe, par l'intermédiaire d'un modulateur piézo- ou magnétostrictif et d'un élément de couplage.

31. Dispositif selon au moins une des revendications 28 à 30, **caractérisé en ce que** les amplitudes et les fréquences des oscillations ultrasoniques peuvent être réglées et régulées.

32. Dispositif selon la revendication 31, **caractérisé en ce que** les amplitudes des oscillations ultrasoniques se situent dans la gamme de 5 µm à 40 µm et les fréquences des oscillations ultrasoniques se situent dans la gamme de 20 kHz à 100 kHz.

33. Dispositif selon au moins une des revendications 23 à 32, **caractérisé en ce que** les moyens pour chauffer la matière plastique par l'outil de coupe comprennent au moins un élément chauffant, un thermocouple et un dispositif de tension de chauffage.

34. Dispositif selon au moins une des revendications 23 à 33, **caractérisé en ce que** l'outil de coupe peut pivoter perpendiculairement et parallèlement par rapport au plan de coupe, au moins dans la direction de coupe, par au moins un élément d'axe.
